(19) **Europäisches Patentamt / European Patent Office / Office européen des brevets**

(11) **EP 2 782 272 B1**

(12) **EUROPEAN PATENT SPECIFICATION**

(45) Date of publication and mention of the grant of the patent:
**04.05.2022 Bulletin 2022/18**

(21) Application number: **12850560.9**

(22) Date of filing: **21.03.2012**

(51) International Patent Classification (IPC):
**H04J 3/06** (2006.01)  **H04L 12/70** (2013.01)

(52) Cooperative Patent Classification (CPC):
**H04J 3/0664**

(86) International application number:
**PCT/CN2012/072667**

(87) International publication number:
**WO 2013/071725 (23.05.2013 Gazette 2013/21)**

(54) **METHOD AND APPARATUS FOR PACKET TIMING RECOVERY**

VERFAHREN UND VORRICHTUNG ZUR WIEDERHERSTELLUNG EINES PAKET-TIMINGS

PROCÉDÉ ET APPAREIL DE RÉCUPÉRATION DE SYNCHRONISATION DES PAQUETS

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **17.11.2011 CN 201110365833**

(43) Date of publication of application:
**24.09.2014 Bulletin 2014/39**

(73) Proprietor: **ZTE Corporation**
**Shenzhen, Guangdong 518057 (CN)**

(72) Inventors:
• **HE, Li**
**Shenzhen**
**Guangdong 518057 (CN)**
• **LI, Zhengqi**
**Shenzhen**
**Guangdong 518057 (CN)**

(74) Representative: **Novagraaf Technologies**
**Bâtiment O2**
**2, rue Sarah Bernhardt**
**CS90017**
**92665 Asnières-sur-Seine Cedex (FR)**

(56) References cited:
**CN-A- 101 599 806      CN-A- 101 640 578**
**CN-A- 101 674 174      US-A1- 2008 002 738**
**US-A1- 2008 080 567      US-A1- 2011 044 357**
**US-A1- 2011 164 627**

• **ILIJA HADZIC ET AL: "Adaptive packet selection for clock recovery", PRECISION CLOCK SYNCHRONIZATION FOR MEASUREMENT CONTROL AND COMMUNICATION (ISPCS), 2010 INTERNATIONAL IEEE SYMPOSIUM ON, IEEE, PISCATAWAY, NJ, USA, 27 September 2010 (2010-09-27), pages 42-47, XP031780855, ISBN: 978-1-4244-5978-0**

**Description**

**Technical Field**

The present invention relates to the field of communications, in particular to a method and apparatus for packet clock recovery.

**Background**

When a packet message traverses different networks such as a router and a switch, time delay will be introduced in the scheduling, forwarding, etc., of the packet message when this packet message passes each node. For a packet message, the particular time delay is affected by various factors, such as forwarding design, background traffic, the length of a background package, Quality of Service (QOS) scheduling policy of a particular device.

At present, after a packet message traverses a packet network, the clock of the message needs to be recovered to ensure the accuracy of the loop. The mainly employed clock recovery method is the Large-scale Access Convergence Router (ACR) self-adaptive technique used in 1588 and Pseudo-Wire Emulation Edge to Edge (PWE3), and the key to packet clock recovery is to find a package signal containing source clock information in a Path Delay Value (PDV) under a complicated network environment.

At present, the algorithm typically used in a clock recovery process is a processing flow from packet message receiving, PDV analysis, control filtering to the processing of a clock generator.

The PDV-level is mainly caused by time-delay variation of the external network and is generally affected by various factors, therefore, the PDV is random and uncertain. In each microcosmic phase discrimination cycle in which PDV data are taken as a prototype, although a short phase discrimination cycle (i.e. a short message selection time window, a message selection time window will be referred to as a time window for short hereinafter) has the advantage of being able to reflect clock changes rapidly, data represented by the short message selection time window might reflect correct original clock information, and might also reflect incorrect information resulted from various factors, such as sudden change in the time delay.

At present, no effective solution is proposed yet for the problem that a short message selection time window might result in a large clock recovery error in related art.

US 2011/164627A1 provides a related technical solution; however, the above mentioned problem still remains unsolved

**Summary**

The embodiments of the present invention provide a method and apparatus for packet clock recovery, to at least solve the problem that a short message selection time window might result in a large clock recovery error in related art,.

According to an embodiment of the present invention, a method for packet clock recovery is provided, according to appended claim 1.

According to another embodiment of the present invention, an apparatus for packet clock recovery is provided, according to appended claim 12.

The embodiments of the present invention use a short message selection time window and a sliding time window in combination to determine the accuracy of a first loop control value generated the current short message selection time window, which avoids the problem of a large clock recovery error resulted from only considering the short message selection time window.

**Brief Description of the Drawings**

Drawings, provided for further understanding of the present invention and forming a part of the specification, are used to explain the present invention together with embodiments of the present invention rather than to limit the present invention. In the drawings:

Fig. 1 shows a schematic diagram of a first processing flow of a method for packet clock recovery according to an embodiment of the present invention;

Fig. 2 shows a schematic diagram of a sliding time window according to an embodiment of the present invention;

Fig. 3 shows a schematic diagram of a second processing flow of a method for packet clockrecovery according to an embodiment of the present invention;

Fig. 4 shows a schematic diagram of a flow of a second-order phase-locked loop according to an embodiment of the present invention;

Fig. 5 shows a schematic diagram of a flow according to embodiment 1 of an embodiment of the present invention; and

Fig. 6 is a structural schematic diagram of an apparatus for packet clock recovery according an embodiment of the present invention.

**Detailed Description of the Embodiments**

The present invention is described below with reference to the accompanying drawings and embodiments in detail. Note that, the embodiments of the present invention and the features of the embodiments can be combined with each other if there is no conflict.

It is mentioned in related art that in each microcosmic phase discrimination cycle taking PDV data as a prototype, although a short phase discrimination cycle has the advantage of being able to reflect clock changes rapidly, data represented by the short message selection time window might reflect correct original clock information, and might also reflect incorrect information resulted from various factors, such as sudden change in the time delay.

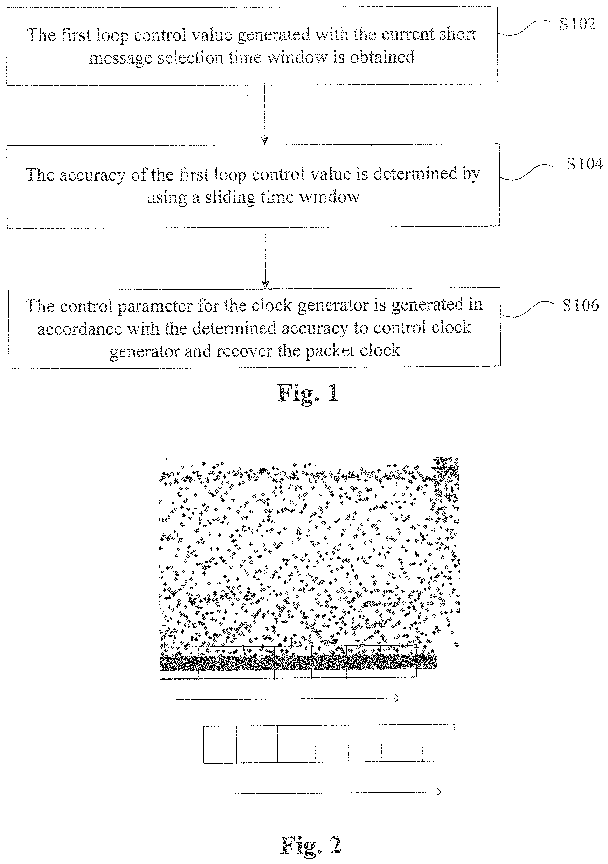

In order to solve the above-mentioned technique problems, a method for packet clock recovery is provided in an embodiment of the present invention, and the processing flow thereof is as shown in Fig. 1, including step S102 to step S106: step S102, a first loop control value generated with a current short message selection time window is acquired;

step S104, the accuracy of the first loop control value is determined using a sliding time window;

wherein the method for setting up a sliding time window is: setting up a sliding time window by using M forward consecutive short message selection time windows based on the current short message selection time window as a starting point; and the schematic diagram of the sliding time window is as shown in Fig. 2;

step S106, a control parameter for a clock generator is generated according to the determined accuracy to control clock generation and recover the packet clock.

In the embodiment of the present invention, a sliding time window is used to determine the accuracy of a first loop control value generated with the current short message selection time window, and the control parameter of the clock generator is generated in accordance with the determined accuracy in order to control clock generation and recover the packet clock. The embodiment of the present invention uses a short message selection time window and a sliding time window in combination to determine the accuracy of a first loop control value generated the current short message selection time window, which avoids the problem of a large clock recovery error resulted from only considering the short message selection time window.

In the flow as shown in Fig. 1, when implementing step S102, the first loop control value generated with a current short message selection time window is acquired in the following manner: a fixed window is used to sample, in the current short message selection time window, values from a message received via a packet network; and package pre-processing, de-jitter and de-noise are performed on the sampled values to obtain the first loop control value.

In the flow as shown in Fig. 1, when implementing step S104, the accuracy of the first loop control value is determined using the result the sliding time window, the determining step is as follows:

step I, sudden change of a PDV (also referred to as PDV hop) and an anomalous point appearing in the current short message selection time window are positioned by using the sliding time window; and

step II, the accuracy of the first loop control value is determined using the result of the positioning.

When the determination is finished according to the above steps, the control parameter for the clock generator is further generated according to the determined accuracy in the following manner:

when the determined accuracy is that the first loop control value is creditable, the first loop control value is used to generate the control parameter for the clock generator; and

when the determined accuracy is that the first loop control value is incredible, a second loop control value is generated according to history data recorded by a long message selection time window, and the control parameter for the clock generator is generated using the second loop control value, wherein the long message selection time window is in units of the short message selection time window, and is used for recording the first loop control value generated by loop analysis within each short message selection time window.

In the process of generating the second loop control value, the second loop control value is generated according to not only the history data recorded by the long message selection time window and but also the prediction performed in combination with property of a crystal selected by the long message selection time window.

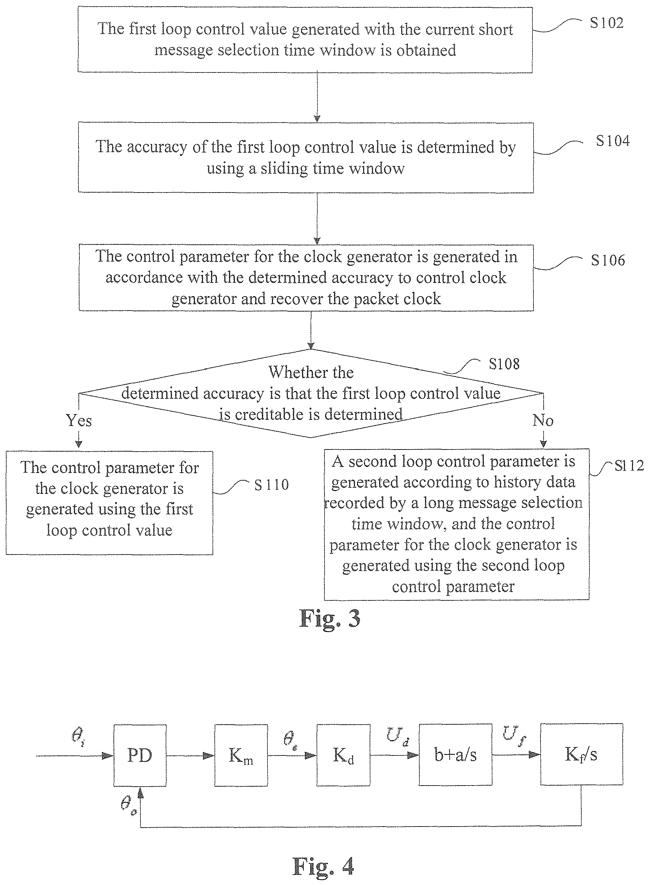

The flowchart of performing clock recovery by combining a short message selection time window, a sliding time window and a long message selection time window is as shown in Fig. 3, including step S102 to step S112:

> step S102, a first loop control value generated with a current short message selection time window is acquired;
> step S104, the accuracy of the first loop control value is determined using the sliding time window;
> step S106, a control parameter for a clock generator is generated according to the determined accuracy to control clock generation and recover the packet clock;
> step S108, whether the determined accuracy is that the first loop control value is creditable is determined;
> step S110, the first loop control value is used to generate the control parameter for the clock generator when the determined accuracy is that the first loop control value is creditable; and
> step S112, when the determined accuracy is that the first loop control value is incredible, a second loop control value is generated according to history data recorded by a long message selection time window, and the control parameter for the clock generator is generated using the second loop control value.

In related art, with respect to clock recovery, the control parameter of the clock generator can also be generated by using a long message selection time window to control clock recovery. However, if a long message selection time window is used, although the influence of short-time fluctuation can be ignored for the short message selection time window and thus PDV time delay is consistent with correct clock information, the clock tracking performance is not good, and the clock change cannot be rapidly reflected. Therefore, in the embodiment of the present invention, if the determined accuracy is that the first loop control value is incredible, a short message selection time window is used in combination with a long message selection time window, and in combination with the PDV sudden change processing capability of the sliding time window, to enhance the stability of frequency recovery and to improve anti-interference capability of the recovered timing by using the property of the crystal selected by the long message selection time window.

In a preferred embodiment, the long message selection time window adopts the form of a queue which allows first in first out, and discards history clock generator control parameters exceeding the cycle of the long time window.

In a preferred embodiment, a second loop control value is generated according to history data recorded by a long message selection time window, and many algorithms can be used therein. In this example, preferably, the second loop control data can be simulated using a reverse-voltage loop control algorithm.

In the reverse-voltage loop control algorithm, the second loop control value can be acquired according to the following formula:

$$T2(n)'' = \theta(n) - \theta(n-1) + T2(n-1) + (T1(n) - T1(n-1))$$

wherein $T2(n)''$ is the second loop control value; $\theta(n)$ is a phase accumulated value of the short message selection time window; T1(n) is a timestamp when the message leaves a master device (master); and T2(n) is a timestamp when the message arrives at a slave device (slaver).

$\theta(n)$ in the above-mentioned formula can be generated according to the following formula: $\theta(n) = 2 \cdot \Delta T \cdot (S\theta(n) - S\theta(n-1)) - \theta(n-1)$, wherein $S\theta(n)$ is the loop integral value, and $\Delta T$ is a time difference between T1(n) and T2(n). Moreover, $S\theta(n)$ can be generated according to the following formula:

$$S\theta(n) = \frac{k_1 \cdot S\theta(n-1) + \theta(n-1)}{2 \cdot k_1 \cdot \Delta T - Uf(n)' + k_2 \cdot S\theta(n)}$$

, wherein k1 and k2 are adjustment parameters, and $\cdot Uf(n)'$ is the control parameter for the clock generator predicted by the long message selection time window.

Accordingly, the control parameter for the clock generator can be generated according to the following formula: $Uf(n)=k_1\Theta(n)+k_2\Theta(n)$, wherein Uf(n) is the phase accumulated value of the clock generator, $\Theta(n)$ is a phase accumulated value of the short message selection time window, and $S\Theta(n)$ is a phase integral value.

Further, S0{n} can generated according to the following formula: $S\Theta(n) = S\Theta(n-1) + [(\Theta(n-1)+\Theta(n1))/2\Lambda T]$, wherein AT is an integral time calculated in the current short message selection time window.

Further, $\theta(n)$ can be generated according to the following formula: $\theta(n) = \theta(n-1) + \Delta\theta(n)$, wherein $\Delta\theta(n)$ is a phase discrimination value of the short message selection time window.

$\Delta\theta(n)$ therein can be generated according to the following formula: $\Delta\theta(n) = (T2(n) - T2(n-1)) - (T1(n) - T1(n-1))$, wherein T1(n) is a timestamp when the message leaves the master, and T2(n) is a timestamp when the message arrives at the slaver.

The above-mentioned formula is generated on the basis of the theory of phase-locked loop, and the analysis of the generation theory thereof is described as follows.

According to the theory of phase-locked loop, taking a second-order phase-locked loop as an example, the schematic diagram of the flow of the second-order phase-locked loop is as shown in Fig. 4.

A timestamp T1 denoting time information of the master represents an input phase $\theta_i$, and a T2 denoting time information of the slaver or a processed T2 represents feeding back phase information $\theta_o$; therefore, the phased discrimination value of the timestamp between the nth and the (n + m)th master and slaver messages can be represented as the phased discrimination value $\theta_e$ input by the phase-locked loop. Therefore, a message information loop control module of the packet can use a common phase-locked loop algorithm.

The model, taking the second-order phase-locked loop as an example, is

$$U_f(n) = K_d \cdot b \cdot \theta_e(n) + K_d \cdot a \cdot \frac{\theta_e(n)}{s}$$ wherein parameter $$K_d = \frac{2\xi\omega_n}{K_f \cdot b}$$, parameter $$\frac{a}{b} = \frac{\omega_n}{2\xi}$$, parameter $K_m$ = $2\pi \cdot f_m \cdot 10^{-9}$, the control parameter for the clock generator is $U_f(t)$, and $K_f$ is the voltage-control sensitivity of a voltage-control oscillator.

$f_m$ is the centre frequency point; $\omega_n$ is the inherent frequency; and $\xi$ is the damping factor;

parameter $$K_1 = K_d \cdot K_m \cdot b = \frac{4\pi \cdot \xi \cdot \omega_n \cdot f_m}{K_f} \cdot 10^{-9}$$ ; and

parameter $$K_2 = K_d \cdot K_m \cdot a = \frac{2\pi \cdot \omega_n^2 \cdot f_m}{K_f} \cdot 10^{-9}$$ .

The above-mentioned second-order loop model can be transformed into the following relationships:

$$\Delta\theta(n) = (T2(n) - T2(n-1)) - (T1(n) - T1(n-1))$$

$$\theta(n) = \theta(n-1) + \Delta\theta(n)$$

$$S\theta(n) = S\theta(n-1) + [(\theta(n-1) + \theta(n))/2 \cdot \Delta T]$$

$$Uf(n) = k_1 \cdot \theta(n) + k_2 \cdot S\theta(n)$$

wherein $\Delta\theta(n)$ is the phased discrimination value of the short time window, wherein phased discrimination can be performed via a timestamp between the nth and the (n + m)th messages, the stamps can be selected as previously stated, and the phased discrimination value can be generated with T1 and T2'. $\theta(n)$ denotes the phase accumulated value of the short time window; $S\theta(n)$ denotes the phase integral value; $Uf(n)$ is the control parameter for the clock generator; and $\Delta T$ denotes the integral time calculated in the current short time window.

With respect to the phase discrimination value generated from T1 and T2' from which jitter is filtered off, stable timing can be obtained via a loop control module.

The method for packet clock recovery provided by an embodiment of the present invention relates to clock recovery after passing through a packet networking, which can be applied to the technique of self-adaptively performing timing processing such as 1588 or E1. By using the method provided by the embodiments of the present invention, new clock recovery architecture can be generated, and a method sufficiently using the property of crystals combined with long and short time windows can be provided to ensure the accuracy of a loop. In other words, by using the method provided by the embodiments of the present invention, new frequency recovery architecture can be generated, the check accuracy for PDV jitter when performing frequency recovery using a packet message can be improved, and the anti-interference property of a loop algorithm can also be improved by sufficiently combining the property of the crystal of the clock generator.

In order to explain the method provided by the embodiments of the present invention more clearly and more apparently, now description is made with a particular embodiment.

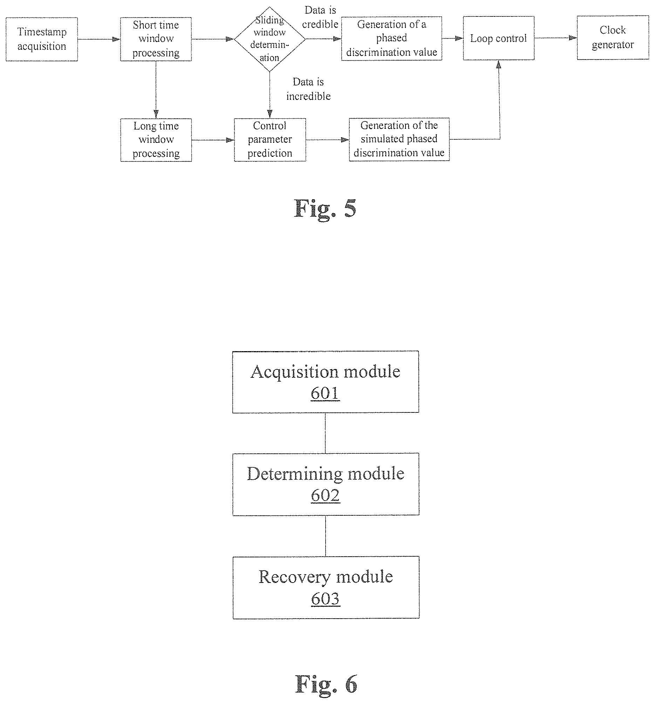

The embodiments of the present invention can be used in 1588v2 clock recovery, and can also be used in packet message-based clock recovery such as an NTP or a CES ACR. Explanation is made to a method embodiment taking 1588 clock recovery as an example, and the schematic diagram of the flow is as shown in Fig. 5.

1. Processing using short time window

Accurate timestamp information of a 158V2 message can be acquired by using hardware. Taking a 1588 sync message as an example, when the 1588 sync message leaves the master device, an accurate T1 timestamp is marked; and when the slaver receives the message, an accurate T2 timestamp is marked. T1 and T2 timestamps indicate clock frequency bias information between the master and the slaver, clock information can be restored at the slaver end via the bias information. However, after the 1588v2 message passes through the packet network, T2 is uncertain due to forwarding time-delay, serious interference will be brought about to clock recovery. Therefore, the data package needs to be processed, and clock recovery is performed according to the processed data.

In a short time window, the slaver device receives the 1588 message, and it is assumed that N messages are received. The received N messages are sampled according to a package-selection policy, and pre-processing, de-jitter and de-noise are performed on the sampled data to generate T2' from which forwarding time-delay interference is preliminarily eliminated, wherein this T2' corresponds to T2.

2. Processing using sliding time window

A sliding time window is set up by using M forward consecutive short message selection time windows based on the current short message selection time window as a starting point, and the schematic diagram is as shown in Fig. 2. The consecutive sliding time window enables to mark real trend information.

By using the technique of small-sudden change detection (small- hop detection), an anomalous point and tiny PDV sudden change can be positioned using the multi-window property, and thus the accuracy of T2' generated in the short time window can be determined.

3. Processing of control loop

According to the theory of phase-locked loop, taking a second-order phase-locked loop as an example, as shown in Fig. 4, a timestamp T1 denoting time information of the master represents an input phase $\theta_i$, and a T2 denoting time information of the slaver or a processed T2 represents feeding back phase information $\theta_o$; therefore, the phased discrimination value of the timestamp between the nth and the (n + m)th master and slaver messages can be represented as the phased discrimination value $\theta_e$ input by the phase-locked loop. Therefore, a message information loop control module of the packet can use a common phase-locked loop algorithm.

The model, taking the second-order phase-locked loop as an example, is

$$U_f(n) = K_d \cdot b \cdot \theta_e(n) + K_d \cdot a \cdot \frac{\theta_e(n)}{s}$$

wherein parameter $K_d = \dfrac{2\xi\omega_n}{K_f \cdot b}$, parameter $\dfrac{a}{b} = \dfrac{\omega_n}{2\xi}$, parameter $K_m = 2\pi \cdot f_m \cdot 10^{-9}$, the control parameter for the clock generator is $U_f(t)$, and $K_f$ is the voltage-control sensitivity of a voltage-control oscillator.

$f_m$ is the centre frequency point; $\omega_n$ is the inherent frequency; and $\xi$ is the damping factor;

$$K_1 = K_d \cdot K_m \cdot b = \frac{4\pi \cdot \xi \cdot \omega_n \cdot f_m}{K_f} \cdot 10^{-9}$$

parameter ; and

$$K_2 = K_d \cdot K_m \cdot a = \frac{2\pi \cdot \omega_n^2 \cdot f_m}{K_f} \cdot 10^{-9}$$

parameter .

The above-mentioned second-order loop model can be transformed into the following relationships:

$$\Delta\theta(n) = (T2(n) - T2(n-1)) - (T1(n) - T1(n-1))$$

$$\theta(n) = \theta(n-1) + \Delta\theta(n)$$

$$S\theta(n) = S\theta(n-1) + [(\theta(n-1) + \theta(n))/2 \cdot \Delta T]$$

$$Uf(n) = k_1 \cdot \theta(n) + k_2 \cdot S\theta(n)$$

wherein $\Delta\theta(n)$ is the phased discrimination value of the short time window, wherein phased discrimination can be performed via a timestamp between the nth and the (n + m)th messages, the stamps can be selected as previously stated, and the phased discrimination value can be generated with T1 and T2'. $\theta(n)$ denotes the phase accumulated value of the short time window; $S\theta(n)$ denotes the phase integral value; $Uf(n)$ is the control parameter for the clock generator; and $\Delta T$ denotes the integral time calculated in the current short time window.

In the above-mentioned formula, n-1 is merely a value for a particular example, and in practical application, n-1 in the above-mentioned formula can be replaced with a general formula n-k, wherein the value of k can be an arbitrary real number determined according to particular situations.

With respect to the phase discrimination value generated from T1 and T2' from which jitter is filtered off, stable clock can be obtained via a loop control module.

4. Determination using sliding time window

A sliding time window provides dynamic real-time monitoring, performs mathematics analysis of association on data of the current short time window and data of a history time window to acquire the accuracy determination of the sampled values of the short time window.

With respect to a point where the value is determined to be creditable, a loop processing module uses the phase discrimination value generated via T1 and T2' of the short time window so that stable timing can be obtained via the loop control module.

With respect to a point where the value is determined to be incredible, the reverse-voltage loop control algorithm is used to simulate loop control data according to long time window data.

5. Prediction using long time window

A long time window is set up, with the minimum unit of the long time window being the short time window, and the control parameter for the clock generator acquired at each short time window is recorded. The long time window is in the form of a queue list which allows first in first out.

In the long time window, the control parameter -$Uf(n)$' for the clock generator of the current time window is predicted according to history data.

There may be many prediction algorithms, which will not be described herein anymore.

6. Particular analysis of the above-mentioned reverse-voltage loop control algorithm is as follows

With respect to the point where the value is determined to be incredible, the loop control parameter is simulated according to long time window data, so as to simulate T2" to replace T2'.

The control loop for a second-order loop is taken as an example.

-$Uf(n)$' is predicted via the long time window, and the loop integral value $S\theta(n)$ and the phase accumulated value $\theta(n)$ can be acquired by the above-mentioned loop formulae.

It can be derived from the above-mentioned formulae that

$$S\theta(n) = \frac{k_1 \cdot S\theta(n-1) + \theta(n-1)}{2 \cdot k_1 \cdot \Delta T} - Uf(n)' + k_2 \cdot S\theta(n)$$

$$\theta(n) = 2 \cdot \Delta T \cdot (S\theta(n) - S\theta(n-1)) - \theta(n-1)$$

Hence, the simulated T2" can be obtained.

$$\Delta\theta(n) = (T2(n) - T2(n-1)) - (T1(n) - T1(n-1))$$

$$T2(n)'' = \theta(n) - \theta(n-1) + T2(n-1) + (T1(n) - T1(n-1))$$

After the simulated T2" is obtained, T2" is taken as the input of the loop control instead of T2', T1 also serves as the input of the loop control, and stable clock is obtained after being processed by the loop control module in step 5.

Based on the same inventive concept, an embodiment of the present invention also provides an apparatus for packet clock recovery, and the structural schematic structure is as shown in Fig. 6, including:

an acquisition module **601** configured to acquire a first loop control value generated with a current short message selection time window;

a determining module **602,** coupled to the acquisition module **601,** configured to determine the accuracy of the first loop control value by using a sliding time window, wherein the sliding time window is set up by using M forward consecutive short message selection time windows based on the current short message selection time window as a starting point; and

a recovery module **603,** coupled to the determining module **602,** configured to generate a control parameter for a clock generator according to the determined accuracy to control clock generation and recover the packet clock.

It can be seen from above description that the present invention achieves the following technical effects.

In the embodiments of the present invention, a sliding time window is used to determine the accuracy of a first loop control value generated with the current short message selection time window, and the control parameter of the clock generator is generated in accordance with the determined accuracy in order to control clock generation and recover the packet clock. The embodiments of the present invention use a short message selection time window and a sliding time window in combination to determine the accuracy of a first loop control value generated the current short message selection time window, which avoids the problem of a large clock recovery error resulted from only considering the short message selection time window.

Obviously, those skilled in the art should know that each of the mentioned modules or steps of the present invention can be realized by universal computing devices; the modules or steps can be focused on single computing device, or distributed on the network formed by multiple computing devices; selectively, they can be realized by the program codes which can be executed by the computing device; thereby, the modules or steps can be stored in the storage device and executed by the computing device; and under some circumstances, the shown or described steps can be executed in different orders, or can be independently manufactured as each integrated circuit module, or multiple modules or steps thereof can be manufactured to be single integrated circuit module, thus to be realized. In this way, the present invention is not restricted to any particular hardware and software combination.

The descriptions above are only the preferable embodiment of the present invention, which are not used to restrict the present invention, for those skilled in the art, the present invention may have various changes and variations. Any amendments, equivalent substitutions, improvements, etc. within the principle of the present invention are all included in the scope of the protection as defined by the appended claims of the present invention.

**Claims**

1.   A method for packet clock recovery, performed by an apparatus, the method comprising:

acquiring a first loop control value generated with a current short message selection time window;

determining accuracy of the first loop control value by using a sliding time window, wherein the sliding time window is set up by using M forward consecutive short message selection time windows based on the current short message selection time window as a starting point; and

generating a control parameter for a clock generator according to the determined accuracy to control clock generation and recover a packet clock;

wherein acquiring the first loop control value generated with the current short message selection time window comprises: in the current short message selection time window, using a fixed window to sample values from a message received via a packet network; and performing packet pre-processing, de-jitter and de-noise on the sampled values to obtain the first loop control value.

2.   The method according to claim 1, **characterized in that** determining the accuracy of the first loop control value by using the sliding time window comprises:

positioning sudden change of a path delay value, PDV, and an anomalous point appearing in the current short message selection time window by using the sliding time window; and
determining the accuracy of the first loop control value using a result of the positioning.

3. The method according to claim 1, **characterized in that** generating the control parameter for the clock generator according to the determined accuracy comprises:

when the determined accuracy is that the first loop control value is creditable, using the first loop control value to generate the control parameter for the clock generator; and
when the determined accuracy is that the first loop control value is increditable, generating a second loop control value according to history data recorded by a long message selection time window, and generating the control parameter for the clock generator using the second loop control value, wherein the long message selection time window is in units of the short message selection time window, and is used for recording the first loop control value generated by loop analysis within each short message selection time window.

4. The method according to claim 3, **characterized in that** generating the second loop control value according to the history data recorded by the long message selection time window comprises: generating the second loop control value according to the history data recorded by the long message selection time window and the prediction performed in combination with property of a crystal selected by the long message selection time window.

5. The method according to claim 3 or 4, **characterized in that** generating the second loop control value according to the history data recorded by the long message selection time window comprises: simulating to obtain the second loop control value using a reverse-voltage loop control algorithm according to the history data recorded by the long message selection time window;
wherein in the reverse-voltage loop control algorithm, the second loop control value is acquired according to the following formula:

$$T2(n)'' = \theta(n) - \theta(n-1) + T2(n-1) + (T1(n) - T1(n-1))$$

Wherein $T2(n)''$ is the second loop control value, $\theta(n)$ is a phase accumulated value of the short message selection time window, T1(n) is a timestamp when the message leaves a master, and T2(n) is a timestamp when the message arrives at a slaver.

6. The method according to claim 5, **characterized in that** $\theta(n)$ is generated according to the following formula: $\theta(n)=2 \cdot \Delta T \cdot (S\theta(n)-S\theta(n-1))-\theta(n-1)$, wherein $S\theta(n)$ is a loop integral value, and $\Delta T$ is a time difference between T1(n) and T2(n).

7. The method according to claim 6, **characterized in that** $S\theta(n)$ is generated according to the following formula:

$$S\theta(n) = \frac{k_1 \cdot S\theta(n-1) + \theta(n-1)}{2 \cdot k_1 \cdot \Delta T - Uf(n)' + k_2 \cdot S\theta(n)}$$ , wherein k1 and k2 are adjustment parameters, and -Uf(n)' is the control parameter for the clock generator predicted by the long message selection time window.

8. The method according to any one of claims 1 to 4, **characterized in that**
the control parameter for the clock generator is generated according to the following formula: $Uf(n) = k_1 \cdot \theta(n) + k_2 \cdot S\theta(n)$, wherein $U_f(n)$ is the control parameter for the clock generator, $\theta(n)$ is a phase accumulated value of the short message selection time window, and $S\theta(n)$ is a phase integral value.

9. The method according to claim 8, **characterized in that** $S\theta(n)$ is generated according to the following formula: $S\theta(n)=S\theta(n-1)+[(\theta(n-1)+\theta(n))/2 \cdot \Delta T]$, wherein $\Delta T$ is an integral time calculated in the current short message selection time window.

10. The method according to claim 9, **characterized in that** $\theta(n)$ is generated according to the following formula: $\theta(n) = \theta(n-1)+\Delta\theta(n)$, wherein $\Delta\theta(n)$ is a phase discrimination value of the short message selection time window.

11. The method according to claim 10, **characterized in that** $\Delta\theta(n)$ is generated according to the following formula: $\Delta\theta(n)=(T2(n)-T2(n-1))-(T1(n)-T1(n-1))$, wherein T1(n) is a timestamp when the message leaves a master, and T2(n) is a timestamp when the message arrives at a slaver.

**12.** An apparatus for packet clock recovery, comprising:

an acquisition module (601), configured to acquire a first loop control value generated by a current short message selection time window;

a determining module (602), configured to determine accuracy of the first loop control value by using a sliding time window, wherein the sliding time window is set up by using M forward consecutive short message selection time windows based on the current short message selection time window as a starting point; and

a recovery module (603) configured to generate a control parameter for a clock generator according to the determined accuracy to control clock generation and recover a packet clock;

wherein acquisition module (601) is further configured to acquire the first loop control value generated by the current short message selection time window by performing the following steps: in the current short message selection time window, using a fixed window to sample values from a message received via a packet network; and performing packet pre-processing, de-jitter and de-noise on the sampled values to obtain the first loop control value.

**Patentansprüche**

**1.** Verfahren zur Pakettaktwiederherstellung, das durch eine Einrichtung durchgeführt wird, wobei das Verfahren umfasst:

Erfassen eines ersten Schleifensteuerwerts, der mit einem aktuellen kurzen Nachrichtenauswahlzeitfenster erzeugt wird;

Bestimmen einer Genauigkeit des ersten Schleifensteuerwerts unter Verwendung eines gleitenden Zeitfensters, wobei das gleitende Zeitfenster durch Verwenden von M vorwärts aufeinanderfolgenden kurzen Nachrichtenauswahlzeitfenstern basierend auf dem aktuellen kurzen Nachrichtenauswahlzeitfenster als einen Startpunkt eingerichtet wird; und

Erzeugen eines Steuerparameters für einen Taktgenerator gemäß der bestimmten Genauigkeit zum Steuern der Takterzeugung und Wiederherstellen eines Pakettaktes;

wobei das Erfassen des ersten Schleifensteuerwerts, der mit dem aktuellen kurzen Nachrichtenauswahlzeitfenster erzeugt wird, umfasst: im aktuellen kurzen Nachrichtenauswahlzeitfenster, Verwenden eines festen Fensters, um Werte aus einer über ein Paketnetz empfangenen Nachricht abzutasten; und Durchführen von Paketvorverarbeitung, De-Jitter und Entrauschen an den abgetasteten Werten, um den ersten Schleifensteuerwert zu erhalten.

**2.** Verfahren nach Anspruch 1, **dadurch gekennzeichnet, dass** das Bestimmen der Genauigkeit des ersten Schleifensteuerwerts unter Verwendung des gleitenden Zeitfensters umfasst:

Positionieren einer plötzlichen Änderung eines Pfadverzögerungswerts, PVD (Path Delay Value), und eines anomalen Punktes, der in dem aktuellen kurzen Nachrichtenauswahlzeitfenster auftritt, unter Verwendung des gleitenden Zeitfensters; und

Bestimmen der Genauigkeit des ersten Schleifensteuerwerts unter Verwendung eines Ergebnisses des Positionierens.

**3.** Verfahren nach Anspruch 1, **dadurch gekennzeichnet, dass** das Erzeugen des Steuerparameters für den Taktgenerator gemäß der bestimmten Genauigkeit umfasst:

wenn die bestimmte Genauigkeit besagt, dass der erste Schleifensteuerwert glaubhaft ist, Verwenden des ersten Schleifensteuerwerts zum Erzeugen des Steuerparameters für den Taktgenerator; und

wenn die bestimmte Genauigkeit besagt, dass der erste Schleifensteuerwert unglaubhaft ist, Erzeugen eines zweiten Schleifensteuerwerts gemäß Verlaufsdaten, die durch ein langes Nachrichtenauswahlzeitfenster aufgezeichnet werden, und Erzeugen des Steuerparameters für den Taktgenerator unter Verwendung des zweiten Schleifensteuerwerts, wobei das lange Nachrichtenauswahlzeitfenster in Einheiten des kurzen Nachrichtenauswahlzeitfensters vorliegt und zum Aufzeichnen des ersten Schleifensteuerwerts, der durch eine Schleifenanalyse innerhalb jedes kurzen Nachrichtenauswahlzeitfensters erzeugt wird, verwendet wird.

4. Verfahren nach Anspruch 3, **dadurch gekennzeichnet, dass** das Erzeugen des zweiten Schleifensteuerwerts gemäß den Verlaufsdaten, die durch das lange Nachrichtenauswahlzeitfenster aufgezeichnet werden, umfasst: Erzeugen des zweiten Schleifensteuerwerts gemäß den Verlaufsdaten, die durch das lange Nachrichtenauswahlzeitfenster aufgezeichnet werden, und der Vorhersage, die in Kombination mit einer Eigenschaft eines Kristalls, ausgewählt durch das lange Nachrichtenauswahlzeitfenster, durchgeführt wird.

5. Verfahren nach Anspruch 3 oder 4, **dadurch gekennzeichnet, dass** das Erzeugen des zweiten Schleifensteuerwerts gemäß den Verlaufsdaten, die durch das lange Nachrichtenauswahlzeitfenster aufgezeichnet werden, umfasst: Simulieren, um den zweiten Schleifensteuerwert zu erhalten, unter Verwendung eines Rückwärtsspannung-Schleifensteueralgorithmus gemäß den Verlaufsdaten, die durch das lange Nachrichtenauswahlzeitfenster aufgezeichnet werden;
wobei im Rückwärtsspannung-Schleifensteueralgorithmus der zweite Schleifensteuerwert gemäß der folgenden Formel erfasst wird:

$$T2(n)'' = \theta(n) - \theta(n-1) + T2(n-1) + (T1(n) - T1(n-1))$$

wobei $T2(n)''$ der zweite Schleifensteuerwert ist, $\theta(n)$ ein phasenakkumulierter Wert des kurzen Nachrichtenauswahlzeitfensters ist, $T1(n)$ ein Zeitstempel ist, wenn die Nachricht einen Master verlässt, und $T2(n)$ ein Zeitstempel ist, wenn die Nachricht bei einem Slaver ankommt.

6. Verfahren nach Anspruch 5, **dadurch gekennzeichnet, dass** $\theta(n)$ gemäß der folgenden Formel erzeugt wird: $\theta(n)$ = $2 \cdot \Delta T \cdot (S\theta(n) - S\theta(n-1)) - \theta(n-1)$, wobei $S\theta(n)$ ein Schleifenintegralwert ist und $\Delta T$ eine Zeitdifferenz zwischen T1(n) und T2(n) ist.

7. Verfahren nach Anspruch 6, **dadurch gekennzeichnet, dass** $S\theta(n)$ gemäß der folgenden Formel erzeugt wird:

$$S\theta(n) = \frac{k_1 \cdot S\theta(n-1) + \theta(n-1)}{2 \cdot k_1 \cdot \Delta T - Uf(n)' + k_2 \cdot S\theta(n)}{}'$$

wobei k1 und k2 Anpassungsparameter sind und $-Uf(n)'$ der Steuerparameter für den Taktgenerator ist, der durch das lange Nachrichtenauswahlzeitfenster vorhergesagt wird.

8. Verfahren nach einem der Ansprüche 1 bis 4, **dadurch gekennzeichnet, dass** der Steuerparameter für den Taktgenerator gemäß der folgenden Formel erzeugt wird: $Uf(n) = k_1 \cdot \theta(n) + k_2 \cdot S\theta(n)$, wobei $Uf(n)$ der Steuerparameter für den Taktgenerator ist, $\theta(n)$ ein phasenakkumulierter Wert des kurzen Nachrichtenauswahlzeitfensters ist und $S\theta(n)$ ein Phasenintegralwert ist.

9. Verfahren nach Anspruch 8, **dadurch gekennzeichnet, dass** $S\theta(n)$ gemäß der folgenden Formel erzeugt wird: $S\theta(n) = S\theta(n-1) + [(\theta(n-1) + \theta(n))/2 \cdot \Delta T]$, wobei $\Delta T$ eine Integralzeit ist, die im kurzen Nachrichtenauswahlzeitfenster berechnet wird.

10. Verfahren nach Anspruch 9, **dadurch gekennzeichnet, dass** $\theta(n)$ gemäß der folgenden Formel erzeugt wird: $\theta(n)$ = $\theta(n-1) + \Delta\theta(n)$, wobei $\Delta\theta(n)$ ein Phasendiskriminierungswert des kurzen Nachrichtenauswahlzeitfensters ist.

11. Verfahren nach Anspruch 10, **dadurch gekennzeichnet, dass** $\Delta\theta(n)$ gemäß der folgenden Formel erzeugt wird: $\Delta\theta(n)$ = $(T2(n) - T2(n-1)) - (T1(n) - T1(n-1))$, wobei $T1(n)$ ein Zeitstempel ist, wenn die Nachricht einen Master verlässt, und $T2(n)$ ein Zeitstempel ist, wenn die Nachricht bei einem Slaver ankommt.

12. Einrichtung zur Pakettaktwiederherstellung, umfassend:

ein Erfassungsmodul (601), das konfiguriert ist zum Erfassen eines ersten Schleifensteuerwerts, der durch ein aktuelles kurzes Nachrichtenauswahlzeitfenster erzeugt wird;
ein Bestimmungsmodul (602), das konfiguriert ist zum Bestimmen einer Genauigkeit des ersten Schleifensteuerwerts unter Verwendung eines gleitenden Zeitfensters, wobei das gleitende Zeitfenster durch Verwenden von M vorwärts aufeinanderfolgenden kurzen Nachrichtenauswahlzeitfenstern basierend auf dem aktuellen kurzen Nachrichtenauswahlzeitfenster als einen Startpunkt eingerichtet wird; und

ein Wiederherstellungsmodul (603), das konfiguriert ist zum Erzeugen eines Steuerparameters für einen Taktgenerator gemäß der bestimmten Genauigkeit zum Steuern der Takterzeugung und Wiederherstellen eines Pakettaktes;

wobei das Erfassungsmodul (601) ferner konfiguriert ist zum Erfassen des ersten Schleifensteuerwerts, der durch das aktuelle kurze Nachrichtenauswahlzeitfenster erzeugt wird, durch Durchführen der folgenden Schritte: im aktuellen kurzen Nachrichtenauswahlzeitfenster, Verwenden eines festen Fensters, um Werte aus einer über ein Paketnetz empfangenen Nachricht abzutasten; und Durchführen von Paketvorverarbeitung, De-Jitter und Entrauschen an den abgetasteten Werten, um den ersten Schleifensteuerwert zu erhalten.

**Revendications**

1. Procédé pour la récupération d'horloge de paquet, réalisé par un appareil, le procédé comprenant :

l'acquisition d'une première valeur de contrôle de boucle générée avec une fenêtre temporelle de sélection de message court actuelle ;
la détermination de la précision de la première valeur de contrôle de boucle en utilisant une fenêtre temporelle glissante, dans lequel la fenêtre temporelle glissante est établie en utilisant M fenêtres temporelles de sélection de message court consécutives en avant sur la base de la fenêtre temporelle de sélection de message court actuelle en tant que point de départ ; et
la génération d'un paramètre de contrôle pour un générateur d'horloge selon la précision déterminée pour contrôler la génération d'horloge et récupérer une horloge de paquet ;
dans lequel l'acquisition de la première valeur de contrôle de boucle générée avec la fenêtre temporelle de sélection de message court actuelle comprend : dans la fenêtre temporelle de sélection de message court actuelle, l'utilisation d'une fenêtre fixe pour échantillonner des valeurs à partir d'un message reçu via un réseau de paquets ; et la réalisation d'un prétraitement de paquet, d'une suppression de gigue et d'une élimination de bruit sur les valeurs échantillonnées pour obtenir la première valeur de contrôle de boucle.

2. Procédé selon la revendication 1, **caractérisé en ce que** la détermination de la précision de la première valeur de contrôle de boucle en utilisant la fenêtre temporelle glissante comprend :

le positionnement d'un changement soudain d'une valeur de retard de trajet, PDV, et d'un point anormal apparaissant dans la fenêtre temporelle de sélection de message court actuelle en utilisant la fenêtre temporelle glissante ; et
la détermination de la précision de la première valeur de contrôle de boucle en utilisant un résultat du positionnement.

3. Procédé selon la revendication 1, **caractérisé en ce que** la génération du paramètre de contrôle pour le générateur d'horloge selon la précision déterminée comprend :

lorsque la précision déterminée est que la première valeur de contrôle de boucle est créditable, l'utilisation de la première valeur de contrôle de boucle pour générer le paramètre de contrôle pour le générateur d'horloge ; et
lorsque la précision déterminée est que la première valeur de contrôle de boucle est incréditable, la génération d'une seconde valeur de contrôle de boucle selon des données d'historique enregistrées par une fenêtre temporelle de sélection de message long, et la génération du paramètre de contrôle pour le générateur d'horloge en utilisant la seconde valeur de contrôle de boucle, dans lequel la fenêtre temporelle de sélection de message long est en unités de la fenêtre temporelle de sélection de message court, et est utilisée pour enregistrer la première valeur de contrôle de boucle générée par une analyse de boucle à l'intérieur de chaque fenêtre temporelle de sélection de message court.

4. Procédé selon la revendication 3, **caractérisé en ce que** la génération de la seconde valeur de contrôle de boucle selon les données d'historique enregistrées par la fenêtre temporelle de sélection de message long comprend : la génération de la seconde valeur de contrôle de boucle selon les données d'historique enregistrées par la fenêtre temporelle de sélection de message long et la prédiction réalisée en combinaison avec la propriété d'un quartz sélectionné par la fenêtre temporelle de sélection de message long.

5. Procédé selon la revendication 3 ou 4, **caractérisé en ce que** la génération de la seconde valeur de contrôle de boucle selon les données d'historique enregistrées par la fenêtre temporelle de sélection de message long comprend : la simulation pour obtenir la seconde valeur de contrôle de boucle en utilisant un algorithme de contrôle de boucle à tension inverse selon les données d'historique enregistrées par la fenêtre temporelle de sélection de message long ;

dans lequel dans l'algorithme de contrôle de boucle à tension inverse, la seconde valeur de contrôle de boucle est acquise selon la formule suivante :

$$T2(n)'' = \theta(n) - \theta(n-1) + T2(n-1) + (T1(n) - T1(n-1))$$

où $T2(n)''$ est la seconde valeur de contrôle de boucle, $\theta(n)$ est une valeur cumulée de phase de la fenêtre temporelle de sélection de message court, T1(n) est une estampille temporelle lorsque le message quitte un maître, et T2(n) est une estampille temporelle lorsque le message arrive au niveau d'un esclave.

6. Procédé selon la revendication 5, **caractérisé en ce que** $\theta(n)$ est généré selon la formule suivante : $\theta(n)=2\cdot\Delta T\cdot(S\theta(n)-S\theta(n-1))-\theta(n-1)$, où $S\theta(n)$ est une valeur intégrale de boucle, et $\Delta T$ est une différence de temps entre T1(n) et T2(n).

7. Procédé selon la revendication 6, **caractérisé en ce que** $S\theta(n)$ est généré selon la formule suivante :

$$S\theta(n) = \frac{k_1 \cdot S\theta(n-1) + \theta(n-1)}{2 \cdot k_1 \cdot \Delta T - Uf(n)' + k_2 \cdot S\theta(n)}$$, où k1 et k2 sont des paramètres d'ajustement, et -$Uf(n)'$ est le paramètre de contrôle pour le générateur d'horloge prédit par la fenêtre temporelle de sélection de message long.

8. Procédé selon l'une quelconque des revendications 1 à 4, **caractérisé en ce que**
le paramètre de contrôle pour le générateur d'horloge est généré selon la formule suivante : $Uf(n) = k_1 \cdot \theta(n) + k_2 \cdot S\theta(n)$ , où $Uf(n)$ est le paramètre de contrôle pour le générateur d'horloge, $\theta(n)$ est une valeur cumulée de phase de la fenêtre temporelle de sélection de message court, et $S\theta(n)$ est une valeur intégrale de phase.

9. Procédé selon la revendication 8, **caractérisé en ce que** $S\theta(n)$ est généré selon la formule suivante : $S\theta(n)=S\theta(n-1)+[(\theta(n-1)+\theta(n))/2\cdot\Delta T]$, où $\Delta T$ est un temps intégral calculé dans la fenêtre temporelle de sélection de message court actuelle.

10. Procédé selon la revendication 9, **caractérisé en ce que** $\theta(n)$ est généré selon la formule suivante : $\theta(n)=\theta(n-1) + \Delta\theta(n)$, où $\Delta\theta(n)$ est une valeur de discrimination de phase de la fenêtre temporelle de sélection de message court.

11. Procédé selon la revendication 10, **caractérisé en ce que** $\Delta\theta(n)$ est généré selon la formule suivante : $\Delta\theta(n)=(T2(n)-T2(n-1))-(T1(n)-T1(n-1))$, où T1(n) est une estampille temporelle lorsque le message quitte un maître, et T2(n) est une estampille temporelle lorsque le message arrive au niveau d'un esclave.

12. Appareil pour la récupération d'horloge de paquet, comprenant :

un module d'acquisition (601), configuré pour acquérir une première valeur de contrôle de boucle générée par une fenêtre temporelle de sélection de message court actuelle ;
un module de détermination (602), configuré pour déterminer la précision de la première valeur de contrôle de boucle en utilisant une fenêtre temporelle glissante, dans lequel la fenêtre temporelle glissante est établie en utilisant M fenêtres temporelles de sélection de message court consécutives en avant sur la base de la fenêtre temporelle de sélection de message court actuelle en tant que point de départ ; et
un module de récupération (603) configuré pour générer un paramètre de contrôle pour un générateur d'horloge selon la précision déterminée pour contrôler la génération d'horloge et récupérer une horloge de paquet ;
dans lequel le module d'acquisition (601) est en outre configuré pour acquérir la première valeur de contrôle de boucle générée par la fenêtre temporelle de sélection de message court actuelle en réalisant les étapes suivantes : dans la fenêtre temporelle de sélection de message court actuelle, utiliser une fenêtre fixe pour échantillonner des valeurs à partir d'un message reçu via un réseau de paquets ; et réaliser un prétraitement de paquet, une suppression de gigue et une élimination de bruit sur les valeurs échantillonnées pour obtenir la première valeur de contrôle de boucle.

The first loop control value generated with the current short message selection time window is obtained $\quad\quad\quad\sim$ S102

The accuracy of the first loop control value is determined by using a sliding time window $\quad\quad\quad\sim$ S104

The control parameter for the clock generator is generated in accordance with the determined accuracy to control clock generator and recover the packet clock $\quad\quad\quad\sim$ S106

**Fig. 1**

**Fig. 2**

The first loop control value generated with the current short message selection time window is obtained — S102

The accuracy of the first loop control value is determined by using a sliding time window — S104

The control parameter for the clock generator is generated in accordance with the determined accuracy to control clock generator and recover the packet clock — S106

Whether the determined accuracy is that the first loop control value is creditable is determined — S108

Yes

No

The control parameter for the clock generator is generated using the first loop control value — S110

A second loop control parameter is generated according to history data recorded by a long message selection time window, and the control parameter for the clock generator is generated using the second loop control parameter — S112

**Fig. 3**

$\theta_i$ → PD → $K_m$ → $\theta_e$ → $K_d$ → $U_d$ → b+a/s → $U_f$ → $K_f/s$

$\theta_o$

**Fig. 4**

Timestamp acquisition → Short time window processing → Sliding window determination → (Data is credible) → Generation of a phased discrimination value → Loop control → Clock generator

Short time window processing → Long time window processing

(Data is incredible) → Control parameter prediction

Long time window processing → Control parameter prediction → Generation of the simulated phased discrimination value → Loop control

Fig. 5

Acquisition module
601

Determining module
602

Recovery module
603

Fig. 6

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2011164627 A1